# EUROPEAN PATENT SPECIFICATION

(11) **EP 3 291 697 B1**
(45) Date of publication and mention of the grant of the patent: **05.12.2018**
(21) Application number: 16726954.7
(22) Date of filing: 03.05.2016
(51) Int. Cl.: A41D 13/018

(54) **PROTECTION DEVICE AND METHOD FOR MANUFACTURING SUCH A PROTECTION DEVICE**
SCHUTZVORRICHTUNG UND VERFAHREN ZUR HERSTELLUNG SOLCH EINER SCHUTZVORRICHTUNG
DISPOSITIF DE PROTECTION ET PROCÉDÉ DE FABRICATION D'UN TEL DISPOSITIF DE PROTECTION

(30) Priority: 06.05.2015 IT VR20150074
(43) Date of publication of application: 14.03.2018
(73) Proprietor: Dainese S.p.A., 36060 Molvena (VI) (IT)
(72) Inventor: RONCO, Luigi, 36060 Molvena (Vicenza) (IT)
(74) Representative: de Benedetti, Fabrizio
(86) International application number: PCT/IB2016/052510
(87) International publication number: WO 2016/178143

(56) References cited:
- EP-A1- 0 994 207
- DE-U1- 7 837 841
- US-A- 5 945 359
- US-A1- 2012 032 422
- US-A1- 2012 055 201

## Description

The present disclosure relates to a protection device, in jargon called airbag, for protecting a use. The protection device includes an inflatable element apt to protect from impacts and/or falling a passenger, a motor vehicle driver or similar user, during a sporting and/or working activity and/or any activity.

A known protection device, such as the one described in WO 2010/067288, includes an element apt to assume an active inflated condition and a rest deflated condition.

The inflatable element in particular is formed by a a first mesh and a second mesh.

The inflatable element further includes a first sheet or first wall and a second sheet or second wall fastened with one another along respective peripheral edges which cover and coat on an outer side, respectively, the first mesh and the second mesh. The known protection device, even if it is advantageous from several points of view, have some drawbacks which have been not yet overcome.

For example, a drawback lies in that the first mesh and the second mesh belong to a textile structure with great sizes and prefabricated, that is a structure, usually sold in rolls, wherein the two meshes are opposed and overlapped. In order to implement the protection device, the prefabricated structure is cut to length according to a drawing established in advance based upon the shape or form or airbag which one wants to obtain. Considering that the sack or inflatable element most times has particular shapes with creeks or curves to be apt to the various portions of the body of a user to be protected, if follows that, after the cut, often there is a high waste material which cannot be recovered.

Furthermore, another problem of the prefabricated structure is that the pulling threads have a pre-established length. In order to implement inflatable elements with different height, it is necessary to make available several textile structures with pulling threads having different lengths and to unite the textile structures. Such solution is an expensive solution and it requires several working phases for cutting and uniting/sewing the textile structures.

A technical problem underlying the present disclosure lies in making available a protection device for the protection of a user capable of overcoming said drawback and/or obtaining additional advantages and making available a garment including said device for the personal protection.

Such problem is solved by a protection device for the protection of a user, by a method for manufacturing a protection device and by a use according to the respective independent claims.

Secondary features of the subject of the present disclosure are defined in the respective depending claims.

The protection device according to the present disclosure characterizes in that, instead of using a prefabricated structure including two meshes, a tailored knitted body is used, based upon the shape of the inflatable element to be obtained. In other words, the protection device according to the present disclosure is implemented by means of a knitting.

Such knitting technique allows overcoming the drawback of a high material waste, since airbag portions are implemented by knitting and they belong to one single knitted body or body with three-dimensional mesh (according to the profile to be obtained) which then is not cut by a prefabricated roll.

In particular, the knitted body according to the present disclosure carries out a similar or same function of the first mesh and of the second mesh described in the above-mentioned International patent application, and it is knitted starting from a thread or tape which is knitted, according to a pre-established drawing so that there is no prefabricated material waste or that such waste is reduced to the minimum.

Within the present disclosure, under the term "thread" an elongated and thin body is meant, with flexible consistency made of a material suitable for a knitting. It can even be a tape or band which can be knitted by means of a machine for knitting or knitting machine. Alternatively to the thread, even a filament can be used, comprising a plurality of threads or fibres wound on themselves, or a plurality of threads approached therebetween.

Under the expression "knitting" a working is meant allowing to obtain an in-series interlacement formed by threads, rings or small circles made of various material.

The mesh can be meant as a tissue or net having a determined mesh opening.

More in particular, according to the present disclosure, it is a knitted body having, contrary to the above-mentioned International patent application, closed structure on at least four sides or walls, wherein, practically said structure has at least a partially tubular shape and defines an inner area or inner chamber. Then, it can be a knitted body defining an inner area or inner chamber, wherein the knitted body includes at least a first knitted face, that is a first side or first portion or knitted wall, at least a second knitted face, that is a second side, or second portion or knitted wall, opposite to the first face; at least a third knitted face, that is a third side or third portion or knitted wall and continuously connected by knitting to the first face and the second face on one side of such two faces; at least a fourth knitted face, that is a fourth face or fourth portion or knitted wall and continuously connected by knitting to the first face and the second face on the other side of such two faces, wherein the fourth face is opposite to the third face.

In other words, it is a body comprising at least a mesh having tubular shape. The tubular structure under a collapsed condition has two opposite and overlapped portions, which result to be connected laterally in one single body without continuity solution by means of respective connecting side portions and which then do not need seams or other connecting method. In other words, contrary to the meshes of the above-mentioned International patent application, the two opposite portions, that is the first wall and the second wall of the knitted body are continuously connected by knitting (without continuity solution) thanks to the fact that the knitted body is a three-dimensional body, at least with tubular shape, worked all together. Furthermore, the inflatable element comprises a plurality of union threads arranged in the inner area and apt to connect at least the first portion/face and the second portion/face of the knitted body. The union threads are integrating portion of the knitted body and they act as tie rods and allow to limit a maximum expansion of the knitted body. In other words, each one of the union threads has a respective first end portion connected to the first side or wall of the worked body and a second end portion connected to the second side or wall of the knitted body. Even the union thread is to be meant as thread with any shape as defined above. The union threads then are knitted starting, too, from a thread or filament which is knitted together with the thread or filament forming the faces of the knitted body.

In other words, according to the present disclosure, the knitted body apart from the thread forming the faces of the knitted body also includes union threads having the function of tie rods, and which play the same function of the tie rod members described in the International patent application mentioned above. Even in this case the union threads are knitted with the knitted body, to form a single body therewith. The union threads are in the inner chamber and cross the latter. The union threads can be worked together with the knitted body in one single productive phase in a respective knitting machine.

The knitted body then is a so-called three-dimensional body, that is it extends at least in three directions and it is already equipped with the union threads at time of the knitting.

In other words, the union threads can be worked together with the knitted body in a knitting machine. To this purpose, at least one group of the union threads belongs to, or is made starting from, one single thread, or one single filament constituted by at least two threads, wherein the single thread or the single filament is extended alternatively continuously by knitting between the first portion and the second portion of the knitted body.

Still more preferably, the single thread or the single filament is arranged in a zigzag manner or according to a sinusoidal pattern between the first portion and the second portion of the knitted body to cover or involve at least a region of the inflatable element. The zig-zag arrangement can be meant widely, in the sense that the union threads can be arranged so as to result with a diagonal arrangement between the first portion of the knitted body and the second portion of the knitted body, or the union threads are arranged substantially orthogonal between the first portion and the second portion.

According to an embodiment of the present disclosure, thanks to the fact that the union threads are united and worked together with the knitted body by means of the same knitting machine, it is possible to adjust or program, already in the productive phase, the length of the union threads depending upon the maximum width of the inflatable element which is wanted to be obtained.

In particular the inflatable element can comprise, in a first area, first union threads having a first length and, in a second area, second union threads having a second length, wherein the first length is different from the second length.

Similarly, according to an embodiment of the present disclosure, thanks to the fact that the union threads are united and worked together with the knitted body by means of the same knitting machine, it is possible to adjust or program, already in the productive phase, the density of the union threads, meant as number of threads per surface unit, depending upon the area of the inflatable element, for example in relation to the distance from a pressure gas generator. The inflatable element then can comprise, in a first area, for example in an area near to the gas generator, union threads distributed with a first density of threads and, in a second area, for example farer from the gas generator, union threads distributed with a second density of threads, wherein the first density of threads is different from the second density of threads, for example a greater density.

It can be noted that the above-described faces of the knitted body have mainly a supporting function for the union threads. It follows that the faces of the knitted body can be made of a different material than the material of the union threads and less resistant and less stiff of the union threads so as not to influence, or to influence to the minimum, on an overall complexity of the knitted body. The faces of the knitted body for example can be made of cotton or wool with a thread with determined title, that is yarns with very soft consistency and suitable for the insertion into a garment with a minimum impact on comfort. The union threads can be made of thread having high resistance to tensile strength. In an embodiment of the present disclosure the thread for implementing the knitted body is a 50 polyester thread, whereas the thread of the union thread is 75 polyester thread. Preferably, in an embodiment of the present disclosure, the knitted body is a body having bag-like structure, that is a structure closed on at least five sides, and having only one open area, or opening or accessing mouth to access an area inside the knitted body.

In other words, according to this last embodiment, the knitted body includes a fifth side or fifth portion/face or knitted wall, wherein the fifth side is connected continuously by knitting to the first side or first portion/face, the second side or second portion/face, the third side or third portion/face and the fourth side or fourth portion/face. Such bag-like structure having one single accessing opening has the advantage of allowing to access the inner area of the knitted body to position possible technical instruments or devices inside the same inflatable device, such as for example a pressure gas generator, sensors and/or electronics for managing the protection device. Should it not be necessary to arrange anything inside the inflatable element, the knitted body can even be a closed casing on all sides, like a balloon made of meshes and collapsed on itself to form two main layers overlapped and united therebetween on the whole periphery in single body. In other words, according to this last embodiment, the knitted body includes a sixth side or sixth portion/face or knitted wall and continuously connected by knitting to the first side or first portion, the second side or second portion/face, the third side or third portion/face and the fourth side or fourth portion, wherein the sixth side or sixth portion/face is substantially opposite to the fifth side or fifth portion/face.

It is to be meant that thanks to the fact that the knitted body is worked with a knitting machine, even the possibility of weaving or knitting electric cables for inner sensors, for example pressure sensors, or for the connection with the managing electronics, should it be inserted inside the knitted body, can be provided.

In order to retain an inflating fluid in the inner chamber of the knitted body, several alternative solutions may be provided.

For example, the mesh can be worked so closely that the mesh openings of said knitted body are at least partially closed to retain at least temporarily an inflating fluid in said inflatable element.

Alternatively the meshes can be welded therebetween after knitting to form a barrier for the inflating fluid.

It is to be meant that the knitted body should not be necessarily implemented so as to be impermeable in absolute way to the inflating fluid, but it is sufficient that the knitted body can remain under inflated condition for a sufficient period of time during the impact.

The mesh openings can be also closed and covered by means of a covering layer or a cover sheet apt to cover an outer surface of said knitted body. The covering layer can be made of any suitable material, such as for example a resin which is spread on an outer surface of the knitted body.

Alternatively or in combination with the previous embodiments, the knitted body can be further comprised or included inside an outer covering casing which can be made of a material impermeable to a gas under pressure or, generally, a material capable to resist to determined gas pressures.

In an embodiment of the present disclosure, the outer cover is implemented like the one described in the above-mentioned International application and formed by a first wall or first sheet and a second wall or second sheet connected therebetween along a periphery, for example by means of gluing.

A method for manufacturing a knitted body as the one described above, for example, provides using a so-called machine for a three-dimensional knitting and known to a person skilled in the art. Preferably it is a knitting machine having two needle beds or including a first needle bed and a second needle bed. It follows that according to the latter embodiment the above-mentioned first side, or first portion or knitted wall is a side of the knitted body worked on a first needle bed of a knitting machine having two needle beds and said second side, or second portion or knitted wall is a side of the knitted body worked on a second needle bed of said knitting machine.

Preferably, it is a rectilinear knitting machine which is capable of knitting in three dimensions and preferably even of uniting the mesh by means of a thread passing transversally inside the dimensional structure and connecting walls or areas of the knitted body, to form the above-mentioned union threads.

In other words, according to an embodiment of the present disclosure, the knitted body can be implemented automatically and with very quick productive time by means of rectilinear knitting machines known in the field of the machines intended to implement garments of three-dimensional type, for example the rectilinear knitting machines intended to implement meshes in one single body, such as for example gloves or socks.

For example a rectilinear knitting machine includes at least two needle beds and it is capable of transferring the meshes of a knitted tissue between the needle beds. Such machine can be configured to perform a step of knitting the mesh on a first needle bed, a step of knitting the mesh on a second needle bed and a step of performing the knitting on a needle bed and on the other needle bed so that the tissue knitted on the first needle bed and the tissue knitted on the second needle bed are connected to each other by means of the union yarn.

In practice, the knitted body is implemented by working alternatively by means of a first thread guide a first thread on the needles of the first needle bed (to form a mesh ranking) and on the needles of the second needle bed (to form the remaining mesh ranking), so as to obtain a complete mesh turn, and then, after some complete mesh turns, the above-mentioned substantially tubular shape, or shape like a tubular mantle, of the knitted body. The rectilinear knitting machine may include a second thread guide which brings the second thread (intended to form the plurality of the union threads) alternatively between the first needle bed and the second needle bed to connect the union thread between the two opposite portions of the knitted body.

The rectilinear knitting machine can be programmed so as to control the length of the union thread and then to adjust the maximum height which the inflatable element can reach under inflated condition.

The fact of using a knitting machine for manufacturing a knitted body with the union threads allows calibrating according to needs the threads thereof the knitted body is made. In particular the tubular mantle and the possible additional side walls of the knitted body can be made of a soft and light material, as above anticipated, so as to reduce to the minimum the impact on an overall weight and to optimize the comfort of the personal protection device. The union threads can be made of a material with higher resistance to tensile strength.

Furthermore, the machine for knitting can be programmed to vary the length and density of the union threads based upon the portion of the protection device wherein they are. In other words, the protection device can include portions intended to protect different areas of a user's body or intended to protect as many parts or portions of a body. It follows that the protection device portions can require a different configuration in terms of overall height or stiffness of protection device under inflated condition. Such material variety and differentiation, length of the union threads or density of the union threads, and/or number of mesh threads can be controlled by means of suitable configuration of the machine for the rectilinear knitting and the variation can be even punctual between a mesh stitch and an adjacent mesh stitch.

For example at side areas (for example near the above-mentioned third face and/or of the above-mentioned fourth face) or folding areas of the knitted body, the union threads can have a lower overall length than the one of the remaining union threads, so as not to leave dead and not inflated areas when the inflatable element is put in tension.

In case to further modulate the bag's stiffness the insertion of stiff portions inside or outside the knitted body can be provided.

With reference to the cover, as said the cover coating the knitted body can be implemented according to a technique known in the field and capable of coping with quick inflations of the inflatable element, in very quick time in the order of milliseconds, and still more in particular between 10 and 500 milliseconds, preferably between 10 and 200 milliseconds, still more preferably to obtain overpressures (with respect to the atmospherical pressure) comprised between 0.5 and 3 bar.

To this regard, in an embodiment, the personal protection device includes means for activating and means for inflating the inflatable element, that is one or more sensors capable of detecting the unexpected event, and valves capable of connecting the inner chamber of the inflatable element with a source of inflating fluid. The source of inflating fluid preferably comprises a generator of cold gas, such as for example helium, that is a container wherein the gas is kept at a high pressure.

It is to be noted that the knitting technique according to the present disclosure can be used for manufacturing a garment which, in a single body, includes the inflatable element. In fact, the machine for knitting can be used for manufacturing a garment (even in one single tissue layer), and programmed for creating in a determined garment area a double layer of tissue with union threads corresponding to the above-mentioned knitted body with tubular shape. The area of the double layer made of tissue can be coated with a cover apt to retain an inflating fluid. Cover sheets or layers can be placed on both sides and closed peripherally around the double layer by providing suitable openings in the tissue layer allowing a mutual gluing of the two covering layers or sheets.

Alternatively, the inflatable element is included in a garment or sub-garment, for example received in a pocket of the garment or the sub-garment.

Still alternatively, the inflatable element coincides with the garment or with the sub-garment, that is the garment or the sub-garment is implemented as a knitted body and with union threads, and equipped with activating and inflating means.

Other advantages, features and use modes of the subject of the present disclosure will result evident from the following detailed description of some preferred embodiments thereof, given by way of example and not for limitative purposes. It is however evident that each embodiment can have one or more of the above-enlisted advantages; in each case it is not requested that each embodiment has simultaneously all enlisted advantages.

The figures of the enclosed drawings will be referred to, wherein:

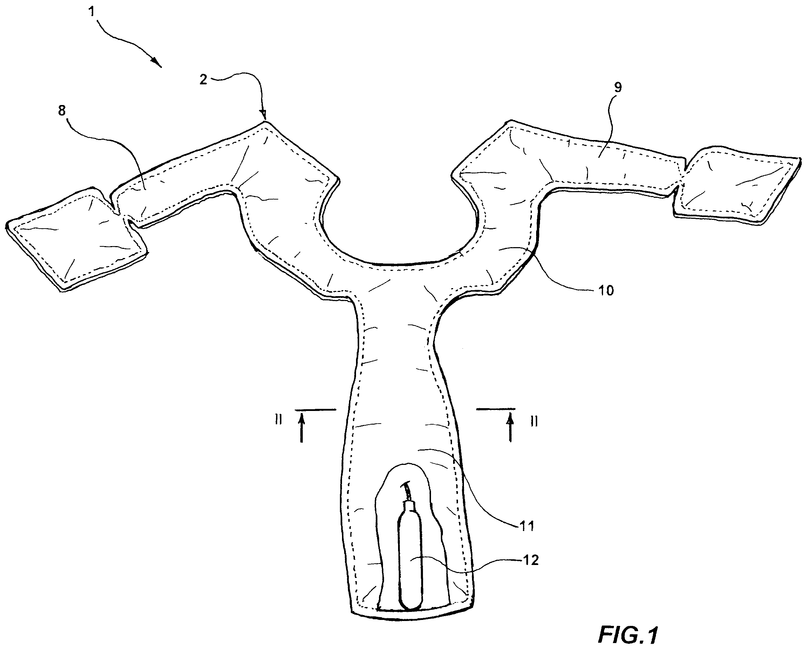

- figure 1 shows a top view of a protection device rested on a plane and manufactured according to the present disclosure;
- figure 2 shows a section view according to the line II-II of figure 1;
- figure 3 shows a detail III of figure 2;
- figure 4 shows a detail IV of figure 2;
- figure 5 shows a top view of a knitted body according to the present disclosure;
- figure 6 shows a view of a step for manufacturing a protection device according to the present disclosure wherein a knitted body is associated to a cover.

By referring to the enclosed figures, with the reference number 1 a protection device according to the present disclosure is designated in agreement with a specific and exemplifying embodiment.

In particular, the protection device 1 comprises an inflatable element 2 apt to assume substantially a first rest condition or deflated condition, and a second active condition or inflated condition. The modes for inflating the inflatable element 2 will be described hereinafter in the description.

The protection device 1 comprises a knitted body 3 having in the example a closed structure, that is it is a substantially casing-like shaped body, that is a three-dimensional structure at least with tubular shape, and preferably mainly closed on five sides or on all sides and defining an inner area or chamber 4.

In the illustrated embodiment the knitted body 3 is a substantially bag-like shaped body having one single opening 6 allowing the access to the inner area 4.

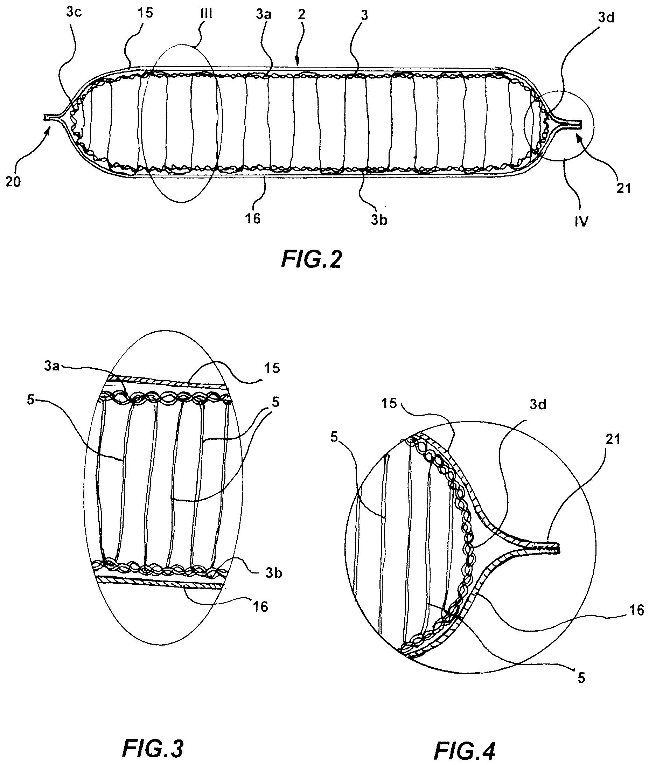

The knitted body 3 then, when laid on a plane and pressed in such extended position, includes two opposite portions/faces or walls 3a, 3b and at least three side portions/faces 3c, 3d, only two thereof can be seen in figures 2 and 4 extending without continuity solution between the two opposite portions 3a, 3b. Thanks to the tubular shape, and still better thanks to the shape like closed bag or casing, the knitted body 3 has the advantage of being closed laterally on at least two sides (at the side portions 3c, 3d) and not requesting a seam at least on said two sides, as for example described in the above-mentioned International patent application.

In the example illustrated in the drawings, the inflatable element 2 has a shape with two side wings 8, 9 for covering the shoulders of a user, a central portion shaped substantially like a "C" 10 and a spinal portion 11, intended to protect the spine of the user. The knitted body 3 has a shape re-using and following the shape of the inflatable element 2 and it is implemented in one single body according to said shape to define a single inner area 4.

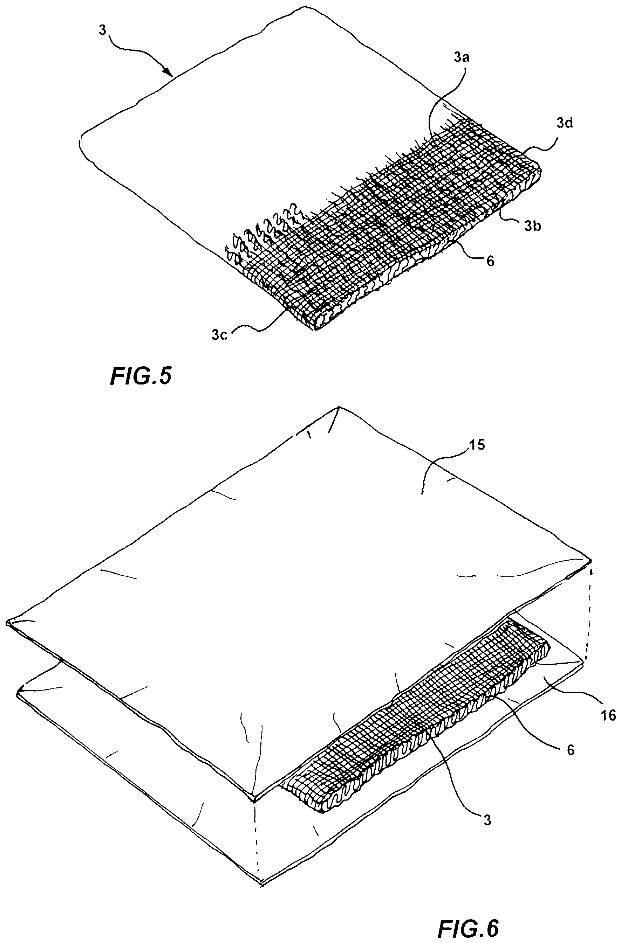

In figure 5 and in figure 6, the knitted body 3, in schematic way, show a substantially rectangular shape in order to show how this is coated and covered by means of a cover. It is to be meant, as said, that the knitted body 3 can have or show a shape corresponding to that of the inflatable element 2 to be obtained.

In the illustrated embodiment, the spinal portion 11 can have said access opening 6 to allow positioning inside the inner area 4 a gas generator under pressure 12. Practically, the gas under pressure is introduced starting from the spinal portion 11. The knitted body 3 further includes a plurality of union threads 5 or pulling threads distributed in the inner chamber 4 and firmly connected to respective portions 3a, 3b of the knitted body 3, in particular to surface portions of the same.

The union thread 5 is an element or entity having the function of keeping united or constrained or fixed, being tensioned to tensile strength, two or more portions of the knitted body 3, at least when the latter is under inflated condition. It is noted that in the illustrated embodiment the plurality of union threads 5 is obtained starting from or belongs to one single thread, or one single filament constituted by at least two threads, wherein the single thread or the single filament is extended alternatively continuously by knitting between the first portion 3a and the second portion 3b of the knitted body 3. The thread thereof the union threads are made is a different thread or filament from that thereof the faces of the knitted body are made.

Still more in particular, the single thread or the single filament is arranged in a zigzag manner or according to a sinusoidal pattern between the first portion 3a and the second portion 3b of the knitted body 3 to cover or occupy a region of the inflatable element 2.

The union threads 5 are suitably sized so that, when the inflatable element 2 is under rest condition, preferably they are not subjected to tension and they are collapsed in the inner chamber 4, whereas when the inflatable element 2 is under inflated condition they are subjected to tension. The threads can be arranged so as to connect opposite portions 3a, 3b of the knitted body 3 or they can be arranged diagonally so as to connect not opposite portions of the knitted body 3.

The threads are distributed closely for example with a density of at least a pulling element each cm² of surface of the inner chamber 4, still more preferably, still by way of example, with density comprised between 1 and 15 threads each cm² of surface of the inflatable element 2, preferably between 4 and 6 threads each cm². The distribution of the threads can be varied according to the protection device area wherein the threads are. The union threads 5 for example can be made of polyester or polyamide, with thickness comprised between about 500 and about 1000 decitex (length unit of a continuous thread or a yarn). Each thread 5 can include a beam of continuous fibres without twist which outgo from a single point of a respective mesh of the knitted body 3.

In an embodiment of the present disclosure, the yarns used to implement the union threads 5 are yarns of different type with respect to those used for implementing the casing-like body and the above-mentioned portions 3a, 3b, 3c, 3d. In particular the union threads are made of a material having greater resistance to tensile strength than the threads of the casing-like body. The threads of the casing-like body can be made of a softer material, so as to obtain an inflatable element which is soft as much as possible and has a light and flexible consistence which is of total comfort for a user wearing it.

The threads of the knitted body 3 can be made of a material variable and differentiated even based upon the area of the protection device wherein they are and upon the area of the body of a user to be protected, for example the union threads 5 have a shorter length in a region of the inflatable element adjacent to the third portion/face 3c and/or the fourth portion/face 3d with respect to a central area of the inflatable element far from the third portion/face 3c and/or the fourth portion/face 3d.

The knitted body 3 and the union threads 5 can be implemented with a machine for knitting, or rectilinear knitting machine of known type which includes two needle beds, that is two rows of needles intended to the working of the knitted body. A knitting machine of known type is a machine for gloves as the one with code SWG0991N by Shima Seiki.

The two needle beds have a field of needles having an extension or length corresponding to a shape size, such as for example width or shape length, of the inflatable element to be obtained, corresponding to one of the two portions 3a or 3b comprised between the portions 3c and 3d for example. The machine is equipped with a first thread guide supporting a first thread intended to form the knitted body 3 and a second thread guide carrying a second thread intended to form the union threads 5.

The machine can be programmed so as to implement the knitted body 3 by means of the first thread guide which works alternatively the thread on the first needle bed of needles and on the second needle bed of needles.

The machine can be programmed so as to unite two opposite areas 3a, 3b of the mesh by means of the second thread carried by the second thread guide, to form the union threads 5. For example the machine can be programmed to work some mesh ranks, so as to form some complete mesh turns, and subsequently to unite by means of the second thread guide, and then the second thread, determined needles of the first needle bed with determined needles of the second needle bed. Subsequently, some mesh turns are worked again to repeat then the knitting with the second thread forming the union threads.

In order to define a specific length of the union thread, it is possible to unite the meshes by means of diagonal union threads. In this case the second thread guide will interlace the union thread with determined needles of the first needle bed and of the second needle bed so that the union threads are arranged diagonally between the needles of a first needle bed and the needles of a second needle bed. Alternatively, the mesh can be worked with a "needle-discarding" technique wherein, for each needle bed one provides using some needles as "operating" needles intended for knitting and then involved by the working of the meshes of the knitted body, and other "not operating" free needles, not involved by the knitting. Such kept-free "not operating" needles allow receiving temporarily the union thread. Practically, the union thread is "parked" momentarily on the "not operating" needle when it is worked between the first needle bed and the second needle bed. In particular, the union thread is knitted on an "operating" needle of the first needle bed intended for the working of the meshes, then it is "parked" on a "not operating" needle of the same first needle bed and subsequently it is worked on an "operating" needle of the second needle bed. In this way, by programming the distance between the first "operating" needle of the first needle bed, the not operating needle of the first needle bed and the "operating" needle of the second needle bed, it is possible establishing in advance the length of the union threads 5 when the knitted body is removed from the knitting machine.

It is to be meant that a person skilled in the use of the rectilinear knitting machines can be able to program the machine in the most optimum way to obtain the wished result.

Additional information about the working of a knitted body by means of union threads can be traced in the Italian patent application TO-2013-A-472, which describes the implementation of knitted bodies equipped with union threads.

It is further to be noted that the rectilinear knitting machine can further be programmed to vary the length of the union thread according to the area of the inflatable element to be implemented. For example, in an area of the knitted body 3 intended to be placed at the peripheral areas or areas 3c, 3d of the inflatable element 2, the union threads 5 can have a length which reduces gradually up to the minimum, in order to guarantee a tension of the union threads 5 even at the peripheral areas when the inflatable element 2 is inflated.

Furthermore, the rectilinear knitting machine can further be programmed to vary the mesh opening, for example by modifying the programming of the discarded needle, or when a closer mesh is required by using a double thread for implementing the mesh.

An important aspect deriving from the fact that the knitted body 3 is obtained in a single working step lies in the fact that it is not necessary to provide peripheral seams in the meshes as on the contrary it was provided in the above-mentioned International patent application.

The knitted body can be further coated and covered by a cover.

The cover can include two walls 15, 16 or sheets made of a sheet of soft and gas-tight material, for example of polyamide or polyurethane, which are opposite one with respect to the other one, and fastened peripherally along respective peripheral edges 20, 21.

The walls 15, 16 can be like those described in the above-mentioned International patent application and they can be made of a laminate, which is usually used as a garment lining and including a layer of fabric, in the example nylon 100% (representing about 65% in weight of the laminate) and a layer of glue, in the example a film of glue (representing about 35% in weight of the laminate), for example polyurethane glue, distributed onto the layer of fabric, by means of roller spreading.

The knitted body 3 is firmly fastened to the surface of the respective wall 15, 16, by means of a film of glue (not visible in the figures). In case of using the above-mentioned laminate, the film of glue is arranged in contact with the layer of glue of the laminate.

The just described protection device is implemented in the following way according to an embodiment.

The knitted body 3 is arranged under extended condition, so that the two opposite portions 3a, 3b are collapsed one onto the other one. The knitted body 3 in such configuration is arranged between two walls 15, 16 and fastened adhering to a respective wall 15, 16, for example by means of glue.

Subsequently, respective opposite peripheral edges 20, 21 of the walls 15 and 16 are overlapped one onto the other one along the periphery.

From the above-mentioned description it comes out that the two walls 15 are 16 substantially are two opposite elements or sheets of the inflatable element 2, fastened along the respective peripheral edges 20 and 21. In any case there is nothing to prevent the two walls 15 and 16 from being opposite portions of one single book-like folded sheet, and then having peripheral edges extended along a portion of the periphery and closed by means of sealing tape.

To implement the inflation of the inflatable element 2, in case of unforeseen fall and/or slide and/or impact by a user or a vehicle whereon he/she proceeds, the protection device 1 according to the present invention is apt to cooperate with suitable activation means operatively connected to inflation means, thereof in figures by purely way of illustration a compressed cold gas cylinder 12 is illustrated, connected by means of a duct or cannula to an intercept valve, fastened to the inflatable element 2, which allows inserting an inflating fluid into the inflatable element 2.

The gas cylinder 12, as above indicated, can be also included inside the inflatable element 2.

Alternatively, such inflating means can include gas generators of pyrotechnic type or hybrid type or other types known to the state of art.

Said inflating means is controlled by a control unit based upon the detection of the status of the vehicle/driver system; for example said control unit can implement a system for predicting the fall allowing to timely identify the fall event and a reliable prediction thereof by means of accelerometric sensors integral to the vehicle (or the driver) and a unit for processing the signals produced by the sensors themselves.

Alternatively, the device according to the present disclosure can also be applied by using an activation cable connected to a vehicle guided by a user, which cable controls the inflation of the inflatable element 2 after the removal of the user from the vehicle, for example, after a fall or an unforeseen impact.

In any case, the above-mentioned activating and inflating means can be integrated in the protection device 1 according to the present invention or placed outside the same.

It is to be also noted that the activation modes, even if they are an aspect of particular relevance for an effective operation of the device, will not be further described with greater detail as they are methods mainly already known to the person skilled in the art of the protection of a subject from unforeseen impacts. The knitted body 3 can include even electric threads which can be knitted together with the knitted body for the connection of inner/outer sensors and/or managing electronics or valves or other electric devices.

It is further to be noted that the protection device can be included in a garment, or it can be integrating portion of a garment. In fact, there is nothing to prevent that, thanks to the programming potential of a rectilinear knitting machine, from implementing in one single producing step a knitted body together with a garment, that is that the knitted body is integrated in one single body with the garment, or even coincides with the garment. In fact for example the knitted body can have a vest-like or jacket-like shape and, for example, worked with a mesh density so as to allow an adequate fluid-tightness of the inflating gas.

In order to make the knitted body impermeable or at least with temporary fluid-tightness, the implementation of a localized cover of the knitted body, or the implementation of a closer mesh at the knitted body, can be provided.

Two covering layers can be provided on opposite sides of the knitted body, and such covering layers can be united by means of suitable openings provided around the knitted body.

The subject of the present disclosure has been sofar described with reference to preferred embodiments. It is to be meant that other embodiments belonging to the same inventive core may exist, all within the protection scope of the herebelow enclosed claims.

## Claims

1. A protection device (1) for the protection of a user, said protection device comprising an inflatable element (2) apt to assume an active inflated condition and a rest deflated condition and wherein said inflatable element (2) includes a knitted body having a closed structure on at least four sides or walls and having at least a partially tubular shape to define an inner area or inner chamber (4), wherein the knitted body (3) includes a plurality of union threads (5) occupying at least partially the inner area (4) and apt to connect two faces or walls (3a, 3b) of the knitted body (3).

2. The protection device (1) according to claim 1, wherein the union threads (5) cross the inner chamber (4) and they are elements knitted with the faces of the knitted body, said union threads being sized so that, when said inflatable element (2) is under the rest deflated condition, said union threads (5) are under a not tensioned condition and collapsed in said inner chamber (3), whereas when said inflatable element (2) is under the active inflated condition, said union threads (5) are subjected to tensile strength, and/or wherein the union threads (5) are joined with the knitted body (3) by knitting.

3. The protection device (1) according to claim 1 or 2, wherein at least a group of said union threads (5) are part of a thread, or of a filament constituted by at least two threads, wherein the thread or filament is continuously extended alternately into the faces of the knitted body.

4. The protection device (1) according to claim 3, wherein the knitted body comprises at least a first face or knitted wall (3a); at least a second face or knitted wall (3b), opposite to the first face (3a); at least a third face or knitted wall (3c) and continuously connected by knitting to the first face (3a) and to the second face (3b); at least a fourth face or knitted wall (3d) and continuously connected by knitting to the first face (3a) and the second face (3b), wherein the fourth face (3d) is opposite to the third face (3c), and wherein the thread or filament extends alternatively, it is arranged in a zigzag manner or according to a sinusoidal pattern, between the first face (3a) and the second face (3b) of the knitted body (3) to occupy at least a region of the inner chamber (4) of the inflatable element (2).

5. The protection device (1) according to claim 4, wherein the union threads (5) have a shorter length in a region of the inflatable element adjacent to the third face (3c) and/or to the fourth face (3d) with respect to a central area of the inflatable element far from the third face (3c) and/or the fourth face (3d).

6. The protection device (1) according to anyone of the previous claims, wherein the union threads (5) are made of a different material than the walls or faces of the knitted body (3) and/or wherein the walls or faces of the knitted body (3) is made of a softer material and/or a less resistant to tensile strength material than a material of the union threads (5).

7. The protection device (1) according to anyone of the previous claims, wherein the inflatable element comprises, in a first area, first union threads (5) having a first length and, in a second area, second union threads (5) having a second length, wherein the first length is different from the second length, and/or wherein the inflatable element comprises, in a first area, union threads (5) distributed with a first density of threads and, in a second area, union threads (5) distributed with a second density of threads, wherein the first density of threads is different from the second density of threads.

8. The protection device (1) according to anyone of the previous claims, wherein the knitted body (3) is a closed body on at least five faces or walls to define a bag comprising at least an access opening (6) to access said inner area (4).

9. The protection device (1) according to anyone of the previous claims, wherein the knitted body (3) is a closed body on all sides to define a closed casing.

10. The protection device (1) according to anyone of the previous claims, wherein at least a first face or knitted wall (3a) is, or corresponds to, a side of the knitted body (3) worked on a first needle bed of a knitting machine having two needle beds and a second wall or knitted face (3b) is, or corresponds to, a side of the knitted body (3) worked on a second needle bed of said knitting machine.

11. The protection device (1) according to anyone of the previous claims, wherein the mesh openings of said knitted body (3) are at least partially closed or covered to retain at least temporarily an inflating fluid in said inflatable element (2), and/or wherein said inflatable element (2) includes a covering layer or a cover sheet (4) apt to cover an outer surface of said knitted body (3).

12. The protection device (1) according to anyone of the previous claims, said protection device being apt to assume said active inflated condition in the event of an unforeseen impact.

13. A garment including, or integrally incorporating, a protection device (1) according to anyone of the previous claims, or garment coincident with a protection device (1) according to anyone of the previous claims.

14. A method for making a protection device (1) for the protection of a user, comprising the steps of
knitting at least a first thread to obtain a knitted body having a closed structure on at least four faces or walls, and having at least a partially tubular shape, to define an inner area or inner chamber (4) wherein said knitted body (3) is intended to be inflated and
knitting at least a second thread so that the second thread is interlaced or interwoven or knitted with the first thread of the faces of the knitted body and wherein the second thread extends alternatively in the chamber between the faces or portions of the knitted body so that a first region of the second thread is knitted with a first face of the knitted body and a second region of the second thread is worked with a second face of the knitted body (3) to define a plurality of union threads (5) crossing the inner chamber (4) and each having a first end portion connected to the first face of the worked body (3) and a second end portion connected to the second face of the knitted body (3).

15. The method according to claim 14, wherein the first thread and the second thread are knitted by means of the same knitting machine.

16. The method according to claim 15, wherein the knitting machine is a rectilinear knitting machine.

17. The method according to claim 15 or 16, wherein the method provides to work the second thread so as to adjust the length of the union threads according to the region of the inflatable element.

18. The method according to anyone of the previous claims 15 to 17, wherein the knitting machine includes at least two needle beds and it is configured to perform a step of knitting the mesh on a first needle bed via the first thread carried by a first thread guide, a step of knitting the mesh on a second needle bed through the first thread carried by the first thread guide, and a step of performing the knitting on one needle bed and on the other needle bed via the second thread carried by a second thread guide so that the knitted body on the first needle bed and the knitted body on the second needle bed are connected to each other by the second thread.

19. The method according to anyone of the previous claims 14 to 18, wherein the first thread is made of a different material than the second thread.

20. The method according to anyone of the previous claims 14 to 19, wherein the method provides to work the first thread so as to form a closed body on at least five faces or walls to define a bag comprising at least an access opening (6) to access said inner area (4).

21. The method according to anyone of the previous claims 14 to 20, wherein the method provides to work the first thread so as to form a closed body on all sides to define a closed casing.

22. The method according to anyone of the previous claims 14 to 21, wherein the method provides to close at least partially the mesh openings of said knitted body (3) for holding at least temporarily in the inner chamber (4) an inflating fluid and/or wherein the method provides to cover or to coat an outer surface of said knitted body (3).

23. A use of a rectilinear knitting machine for manufacturing a protection device airbag (1) having an inner chamber (4), wherein said rectilinear knitting machine is configured to work a first thread for manufacturing a body with casing and a second thread for manufacturing union threads crossing the inner chamber (4), wherein the protection device airbag (1) is the protection device according to anyone of the previous claims 1 to 12, or a device obtained by means of the method according to anyone of claims 14 to 22.

## Patentansprüche

1. Schutzvorrichtung (1) zum Schutz eines Benutzers, wobei die Schutzvorrichtung ein aufblasbares Element (2) aufweist, das einen aktiven aufgeblasenen Zustand und einen nicht aufgeblasenen Ruhezustand annehmen kann, und wobei das aufblasbare Element (2) einen gewirkten Körper enthält, der eine geschlossene Struktur an mindestens vier Seiten oder Wänden und mindestens eine teilweise röhrenförmige Form aufweist, um einen inneren Bereich oder eine innere Kammer (4) zu definieren, wobei der gewirkte Körper (3) eine Vielzahl von Verbindungsfäden (5) aufweist, die zumindest teilweise den inneren Bereich (4) okkupieren und dazu geeignet sind, zwei Flächen oder Wände (3a, 3b) des gewirkten Körpers (3) zu verbinden.

2. Schutzvorrichtung (1) gemäß Anspruch 1, wobei die Verbindungsfäden (5) die innere Kammer (4) kreuzen und Elemente sind, die mit den Flächen des gewirkten Körpers gewirkt sind, wobei die Verbindungsfäden so bemessen sind, dass, wenn das aufblasbare Element (2) sich im nicht aufgeblasenen Ruhezustand befindet, die Verbindungsfäden (5) in einem nicht gespannten Zustand und in das innere der Kammer (3) kollabiert sind, während, wenn sich das aufblasbare Element (2) im aktiven aufgeblasenen Zustand befindet , die Verbindungsfäden (5) einer Zugkraft unterworfen werden, und/oder wobei die Verbindungsfäden (5) durch Wirken mit dem gewirkten Körper (3) verbunden sind.

3. Schutzvorrichtung (1) gemäß Anspruch 1 oder 2, wobei mindestens eine Gruppe der Verbindungsfäden (5) Teil eines Fadens oder eines Filaments ist, der oder das aus mindestens zwei Fäden besteht, wobei der Faden oder das Filament kontinuierlich abwechselnd in die Flächen des gewirkten Körpers verlängert ist.

4. Schutzvorrichtung (1) gemäß Anspruch 3, wobei der gewirkte Körper umfasst: Mindestens eine erste Fläche oder gewirkte Wand (3a); mindestens eine zweite Fläche oder gewirkte Wand (3b), die der ersten Fläche (3a) gegenüberliegt; mindestens eine dritte Fläche oder gewirkte Wand (3c), die durch Wirken kontinuierlich mit der ersten Fläche (3a) und der zweiten Fläche (3b) verbunden ist; mindestens eine vierte Fläche oder geistwirkte Wand (3d) die kontinuierlich durch Wirken mit der ersten Fläche (3a) und der zweiten Fläche (3b) verbunden ist, wobei die vierte Fläche (3d) der dritten Fläche (3c) gegenüberliegt, und worin sich der Faden oder das Filament abwechselnd erstreckt, er oder es zickzackförmig oder sinusförmig zwischen der ersten Fläche (3a) und der zweiten Fläche (3b) des Gewirkkörpers (3) angeordnet ist, um mindestens einen Bereich des innere Kammer (4) des aufblasbaren Elements (2) zu okkupieren.

5. Schutzvorrichtung (1) gemäß Anspruch 4, wobei die Verbindungsfäden (5) in einem Bereich des aufblasbaren Elements benachbart zu der dritten Fläche (3c) und / oder zu der vierten Fläche (3d) eine kürzere Länge aufweisen in Bezug auf einen mittigen Bereich des aufblasbaren Elements, der von der dritten Fläche (3c) und / oder der vierten Fläche (3d) beabstandet ist.

6. Schutzvorrichtung (1) gemäß einem der vorhergehenden Ansprüche, wobei die Verbindungsfäden (5) aus einem anderen Material hergestellt sind als die Wände oder Flächen des gewirkten Körpers (3) und / oder wobei die Wände oder Flächen der Gewirke der Körper (3) aus einem weicheren Material und / oder einem weniger reißfesten Material als ein Material der Verbindungsfäden (5).

7. Schutzvorrichtung (1) gemäß einem der vorhergehenden Ansprüche, wobei das aufblasbare Element aufweist: In einem ersten Bereich erste Verbindungsfäden (5) mit einer ersten Länge und in einem zweiten Bereich zweite Verbindungsfäden (5) mit einer zweite Länge, wobei sich die erste Länge von der zweiten Länge unterscheidet, und/oder wobei das aufblasbare Element aufweist: In einem ersten Bereich Verbindungsfäden (5), die mit einer ersten Fadendichte verteilt sind und in einem zweiten Bereich Verbindungsfäden (5), die mit Fadendichte verteilt sind, wobei sich die erste Fadendichte von der zweiten Fadendichte unterscheidet.

8. Schutzvorrichtung (1) gemäß einem der vorhergehenden Ansprüche, wobei der gewirkte Körper (3) an mindestens fünf Seiten oder Wänden ein geschlossener Körper ist, um einen Beutel zu definieren, der mindestens eine Zugangsöffnung (6) zum Zugang zu dem inneren Bereich (4) aufweist.

9. Schutzvorrichtung (1) gemäß einem der vorhergehenden Ansprüche, wobei der gewirkte Körper (3) auf allen Seiten ein geschlossener Körper ist, um ein geschlossenes Gehäuse zu definieren.

10. Schutzvorrichtung (1) gemäß einem der vorhergehenden Ansprüche, wobei mindestens eine erste Seite oder gewirkte Wand (3a) eine Seite des gewirkten Körpers (3) ist oder ihr entspricht, die an einem ersten Nadelbett einer Wirkmaschine mit zwei Nadelbetten gearbeitet wurde, und eine zweite Seite oder gewirkte Wand (3b) eine Seite des gewirkten Körpers (3) ist oder ihr entspricht, die an einem zweiten Nadelbett der Wirkmaschine gearbeitet wurde.

11. Schutzvorrichtung (1) gemäß einem der vorhergehenden Ansprüche, wobei die Maschenöffnungen des gewirkten Körpers (3) zumindest teilweise geschlossen oder bedeckt sind, um zumindest vorübergehend ein Aufblasfluid in dem aufblasbaren Element (2) zurückzuhalten, und/oder wobei das aufblasbare Element (2) eine bedeckende Schicht oder eine Deckschicht (4) aufweist, die geeignet ist, eine äußere Oberfläche des gewirkten Körpers (3) zu bedecken.

12. Schutzvorrichtung (1) gemäß einem der vorhergehenden Ansprüche, wobei die Schutzvorrichtung geeignet ist, den aktiven aufgeblasenen Zustand im Falle eines unvorhergesehenen Aufpralls anzunehmen.

13. Kleidungsstück, welches eine Schutzvorrichtung (1) gemäß einem der vorhergehenden Ansprüche oder ein Kleidungsstück, das mit einer Schutzvorrichtung (1) gemäß einem der vorhergehenden Ansprüche übereinstimmt umfasst oder ganzheitlich mit sich vereint.

14. Verfahren zum Herstellen einer Schutzvorrichtung (1) zum Schutz eines Benutzers, umfassend die Schritte:
Wirken mindestens eines ersten Fadens, um einen gewirkten Körper mit einer geschlossenen Struktur auf mindestens vier Seiten oder Wänden zu erhalten, und der zumindest eine teilweise röhrenartige Form aufweist, um einen inneren Bereich oder eine innere Kammer (4) zu definieren, wobei der gewirkte Körper (3) zum Aufblasen vorgesehen ist, und
Wirken mindestens eines zweiten Fadens, so dass der zweite Faden mit dem ersten Faden der Seiten des gewirkten Körpers verflochten oder verwoben oder verwirkt ist und wobei der zweite Faden sich abwechselnd in der Kammer zwischen den Seiten oder Abschnitten des Gewirkkörpers erstreckt, so dass ein erster Bereich des zweiten Fadens mit einer ersten Seite des Gewirkkörpers gewirkt ist und ein zweiter Bereich des zweiten Fadens mit einer zweiten Seite des gewirkten Körpers (3) bearbeitet ist, um mehrere Verbindungsfäden (5) zu definieren, welche die innere Kammer (4) kreuzen und jeweils einen ersten Endabschnitt aufweisen, der mit der ersten Seite des bearbeiteten Körpers (3) verbunden ist und einen zweiten Endabschnitt aufweisen, der mit der zweiten Seite des gewirkten Körpers (3) verbunden ist.

15. Verfahren gemäß Anspruch 14, wobei der erste Faden und der zweite Faden mittels derselben Wirkmaschine gewirkt werden.

16. Verfahren gemäß Anspruch 15, wobei die Wirkmaschine eine geradlinige Wirkmaschine ist.

17. Verfahren gemäß Anspruch 15 oder 16, wobei das Verfahren vorsieht, den zweiten Faden so zu bearbeiten, dass die Länge der Verbindungsfäden entsprechend dem Bereich des aufblasbaren Elements angepasst wird.

18. Verfahren gemäß einem der vorhergehenden Ansprüche 15 bis 17, wobei die Wirkmaschine mindestens zwei Nadelbetten umfasst und konfiguriert ist, um auszuführen: Einen Schritt des Wirkens des Netzes auf einem ersten Nadelbett mittels des von einem ersten Fadenführer getragenen ersten Fadens, einen Schritt des Wirkens des Netzes auf einem zweiten Nadelbett mittels des von dem ersten Fadenführer getragenen ersten Faden und einen Schritt des Wirkens auf dem einen Nadelbett und auf dem anderen Nadelbett mittels des von einem zweiten Fadenführer getragenen zweiten Fadens, so, dass der gewirkte Körper auf dem ersten Nadelbett und der gewirkte Körper auf dem zweiten Nadelbett durch den zweiten Faden miteinander verbunden sind.

19. Verfahren gemäß einem der vorhergehenden Ansprüche von 14 bis 18, wobei der erste Faden aus einem anderen Material als der zweite Faden hergestellt ist.

20. Verfahren gemäß einem der vorhergehenden Ansprüche 14 bis 19, wobei das Verfahren vorsieht, den ersten Faden so zu bearbeiten, dass ein geschlossener Körper auf mindestens fünf Seiten oder Wänden gebildet wird, um einen Beutel zu definieren, der mindestens eine Zugangsöffnung (6) zum Zugang des inneren Bereichs umfasst.

21. Verfahren gemäß einem der vorhergehenden Ansprüche 14 bis 20, wobei das Verfahren vorsieht, den ersten Faden so zu bearbeiten, dass auf allen Seiten ein geschlossener Körper gebildet wird, um ein geschlossenes Gehäuse zu definieren.

22. Verfahren gemäß einem der vorhergehenden Ansprüche 14 bis 21, wobei das Verfahren vorsieht, die Maschenöffnungen des gewirkten Körpers (3) zumindest teilweise zu schließen, um zumindest vorübergehend ein Aufblasfluid in der inneren Kammer (4) zu halten, und/oder wobei das Verfahren vorsieht, eine äußere Oberfläche des gewirkten Körpers (3) zu bedecken oder zu beschichten.

23. Verwendung einer geradlinigen Wirkmaschine zum Herstellen eines Schutzvorrichtungs-Airbags (1) mit einer inneren Kammer (4), wobei die geradlinige Wirkmaschine ausgebildet ist zum Bearbeiten eines ersten Fadens zum Herstellen eines Körpers mit Hülle und eines zweiten Fadens zum Herstellen von Verbindungsfäden, welche die inneren Kammer (4) durchqueren, wobei der Schutzvorrichtungsairbag (1) die Schutzvorrichtung gemäß einem der vorhergehenden Ansprüche 1 bis 12 oder eine Vorrichtung ist, die mittels des Verfahrens gemäß einem der Ansprüche 14 bis 22 erhalten wurde.

## Revendications

1. Dispositif de protection (1) pour la protection d'un utilisateur, ledit dispositif de protection comprenant un élément gonflable (2) pouvant assumer une condition gonflée active et une condition dégonflée au repos et dans lequel ledit élément gonflable (2) comprend un corps tricoté ayant une structure fermée sur au moins quatre côtés ou parois et ayant au moins une forme en partie tubulaire pour définir une aire interne ou une chambre interne (4), dans lequel le corps tricoté (3) comprend une pluralité de fils d'union (5) occupant au moins en partie l'aire interne (4) et pouvant relier deux faces ou parois (3a, 3b) du corps tricoté (3).

2. Dispositif de protection (1) selon la revendication 1, dans lequel les fils d'union (5) traversent la chambre interne (4) et sont des éléments tricotés avec les faces du corps tricoté, lesdits fils d'union étant dimensionnés de telle sorte que, quand ledit élément gonflable (2) est dans la condition dégonflée au repos, lesdits fils d'union (5) sont sous une condition non tendue et affaissés dans ladite chambre interne (3), alors que quand ledit élément gonflable (2) est dans la condition gonflée active, lesdits fils d'union (5) sont soumis à une résistance au déchirement, et / ou dans lequel les fils d'union (5) sont joints au corps tricoté (3) par tricotage.

3. Dispositif de protection (1) selon la revendication 1 ou 2, dans lequel au moins un groupe desdits fils d'union (5) forment partie d'un fil, ou d'un filament constitué par au moins deux fils, dans lequel le fil ou filament est étendu en continu en alternance dans les faces du corps tricoté.

4. Dispositif de protection (1) selon la revendication 3, dans lequel le corps tricoté comprend au moins une première face ou paroi tricotée (3a) ; au moins une deuxième face ou paroi tricoté (3b), opposée à la première face (3a) ; au moins une troisième face ou paroi tricotée (3c) et reliée en continu par tricotage à la première face (3a) et à la deuxième face (3b) ; au moins une quatrième face ou paroi tricotée (3d) et reliée en continu par tricotage à la première face (3a) et à la deuxième face (3b), dans lequel la quatrième face (3d) est opposée à la troisième face (3c) et dans lequel le fil ou filament s'étendant en alternance est agencé de manière en zig-zag ou selon un motif sinusoïdal entre la première face (3a) et la deuxième face (3b) du corps tricoté (3) pour occuper au moins une région de la chambre interne (4) de l'élément gonflable (2).

5. Dispositif de protection selon la revendication 4, dans lequel les fils d'union (5) ont une longueur plus courte dans une région de l'élément gonflable adjacente à la troisième face (3c) et / ou à la quatrième face (3d) par rapport à une aire centrale de l'élément gonflable loin de la troisième face (3c) et / ou de la quatrième face (3d).

6. Dispositif de protection (1) selon l'une quelconque des revendications précédentes, dans lequel les fils d'union (5) sont réalisés à partir d'un matériau différent de celui des parois ou faces dudit corps tricoté (3) et / ou dans lequel les parois ou faces du corps tricoté (3) sont réalisées à partir d'un matériau plus doux et / ou d'un matériau moins résistant à une résistance au déchirement qu'un matériau des fils d'union (5).

7. Dispositif de protection (1) selon l'une quelconque des revendications précédentes, dans lequel l'élément gonflable comprend, dans une première aire, des premiers fils d'union (5) ayant une première longueur et, dans une seconde aire, des seconds fils d'union (5) ayant une seconde longueur, dans lequel la première longueur est différente de la seconde longueur, et / ou dans lequel l'élément gonflable comprend, dans une première aire, des fils d'union (5) répartis avec une première densité de fils et, dans une seconde aire, des fils d'union (5) répartis avec une seconde densité de fils, dans lequel la première densité de fils est différente de la seconde densité de fils.

8. Dispositif de protection (1) selon l'une quelconque des revendications précédentes, dans lequel le corps tricoté (3) est un corps fermé sur au moins cinq faces ou parois pour définir un sac comprenant au moins une ouverture d'accès (6) pour accéder à ladite aire interne (4).

9. Dispositif de protection (1) selon l'une quelconque des revendications précédentes, dans lequel le corps tricoté (3) est un corps fermé sur tous les côtés pour définir une enveloppe fermée.

10. Dispositif de protection (1) selon l'une quelconque des revendications précédentes, dans lequel au moins une première face ou paroi tricotée (3a) est, ou correspond à, un côté du corps tricoté (3) travaillé sur un premier fonture d'un métier à tricot ayant deux fontures et une seconde paroi ou face tricotée (3b) est, ou correspond à, un côté du corps tricoté (3) travaillé sur un second fonture dudit métier à tricot.

11. Dispositif de protection (1) selon l'une quelconque des revendications précédentes, dans lequel les ouvertures de mailles dudit corps tricoté (3) sont au moins en partie fermées ou couvertes pour retenir au moins temporairement un liquide de gonflage dans ledit élément gonflable (2) et / ou dans lequel ledit élément gonflable (2) comprend une couche de couverture ou une couche de recouvrement (4) pouvant recouvrir une surface externe dudit corps tricoté (3).

12. Dispositif de protection (1) selon l'une quelconque des revendications précédentes, ledit dispositif de protection pouvant assumer ladite condition gonflée active en cas d'impact imprévu.

13. Vêtement comprenant, ou incorporant d'un seul tenant, un dispositif de protection (1) selon l'une quelconque des revendications précédentes ou vêtement coïncidant avec un dispositif de protection (1) selon l'une quelconque des revendications.

14. Procédé de fabrication d'un dispositif de protection (1) pour la protection d'un utilisateur, comprenant les étapes consistant à :
tricoter au moins un premier fil pour obtenir un corps tricoté ayant une structure fermée sur au moins quatre faces ou parois, et ayant au moins en partie une forme tubulaire, pour définir une aire interne ou chambre interne (4) dans lequel ledit corps tricoté (3) est destiné à être gonflé, et
tricoter au moins un second fil de sorte que le second fil soit entrelacé ou enchevêtré ou tricoté avec le premier fil des faces du corps tricoté et dans lequel le second fil s'étend en alternance dans la chambre entre les faces ou parties du corps tricoté de telle sorte qu'une première région du premier fil est tricotée avec une première face du corps tricoté et une seconde région du second fil est travaillée avec une seconde face du corps tricoté (3) pour définir une pluralité de fils d'union (5) traversant la chambre (4) et ayant chacun une première partie d'extrémité reliée à la première face du corps travaillé (3) et une seconde partie d'extrémité reliée à la seconde face du corps tricoté (3).

15. Procédé selon la revendication 14, dans lequel le premier fil et le second fil sont tricotés à l'aide du même métier de tricotage.

16. Procédé selon la revendication 15, dans lequel le métier de tricotage est un métier de tricotage rectiligne.

17. Procédé selon la revendication 15 ou 16, dans lequel le procédé prévoit de travailler le second fil de façon à régler la longueur des fils d'union selon la région de l'élément gonflable.

18. Procédé selon l'une quelconque des revendications précédentes 15 à 17, dans lequel le métier de tricotage comprend au moins deux fontures et est configuré pour exécuter une étape consistant à tricoter la maille sur un premier fonture par l'intermédiaire du premier fil porté par un premier guide-fil, une étape consistant à tricoter la maille sur un deuxième fonture par l'intermédiaire du premier fil porté par le premier guide-fil et une étape consistant à exécuter le tricotage sur un fonture et sur l'autre fonture par l'intermédiaire du second fil porté par un second guide-fil de sorte que le corps tricoté sur le premier fonture et le corps tricoté sur le second fonture soient reliés l'un à l'autre par le second fil.

19. Procédé selon l'une quelconque des revendications précédentes 14 à 18, dans lequel le premier fil est réalisé à partir d'un matériau différent du second fil.

20. Procédé selon l'une quelconque des revendications précédentes 14 à 19, dans lequel le procédé prévoit de travailler le premier fil de façon à former un corps fermé sur au moins cinq faces ou parois pour définir un sac comprenant au moins une ouverture d'accès (6) pour accéder à ladite aire interne (4).

21. Procédé selon l'une quelconque des revendications précédentes 14 à 20, dans lequel le procédé prévoit de travailler le premier fil de façon à former un corps fermé sur tous les côtés pour définir une enveloppe fermée.

22. Procédé selon l'une quelconque des revendications précédentes 14 à 21, dans lequel le procédé fait en sorte de fermer au moins en partie les ouvertures de maille dudit corps tricoté (3) pour maintenir au moins temporairement dans la chambre interne (4) un liquide de gonflage et / ou dans lequel le procédé fournit la couverture ou le revêtement d'une surface externe dudit corps tricoté (3).

23. Utilisation d'un métier rectiligne de tricot pour fabriquer un coussin gonflable de dispositif de protection (1) ayant une chambre interne (4), dans lequel ledit métier rectiligne de tricot est configuré pour travailler un premier fil en vue de fabriquer un corps avec une enveloppe et un second fil pour fabriquer des fils d'union traversant la chambre interne (4), dans lequel le coussin gonflable de dispositif de protection (1) est le dispositif de protection selon l'une quelconque des revendications précédentes 1 à 12 ou un dispositif obtenu à l'aide du procédé selon l'une quelconque des revendications 14 à 22.
